# EUROPÄISCHE PATENTSCHRIFT

(11) **EP 1 661 363 B1**
(45) Veröffentlichungstag und Bekanntmachung des Hinweises auf die Patenterteilung: **18.06.2008**
(21) Anmeldenummer: 04766640.9
(22) Anmeldetag: 30.08.2004
(51) Int. Cl.: H04L 29/06, H04M 7/00

(54) **VERFAHREN ZUR UNTERSTUETZUNG DES NAME DELIVERY LEISTUNGSMERKMALES FUER GEMISCHTE TDM NETZE/SIP CENTREX KOMMUNIKATIONS- ARCHITEKTUREN**
METHOD FOR SUPPORTING THE NAME DELIVERY FEATURE FOR MIXED TDM NETWORKS/SIP CENTREX COMMUNICATION ARCHITECTURES
PROCEDE DESTINE A SUPPORTER LA CARACTERISTIQUE DE FOURNITURE DU NOM POUR DES RESEAUX TDM/ARCHITECTURES DE COMMUNICATION SIP CENTREX MIXTES

(30) Priorität: 05.09.2003 DE 10341087
(43) Veröffentlichungstag der Anmeldung: 31.05.2006
(73) Patentinhaber: Nokia Siemens Networks GmbH & Co. KG, 81541 München (DE)
(72) Erfinder: HOFFMANN, Klaus, 81735 München (DE)
(86) Internationale Anmeldenummer: PCT/EP2004/051957
(87) Internationale Veröffentlichungsnummer: WO 2005/025172

(56) Entgegenhaltungen:
- WO-A-01/10140
- US-A1- 2003 104 812
- CAMARILLO G ET AL: "Draft-ietf-sip-isup-03.txt: ISUP to SIP mapping" IETF INTERNET DRAFT, August 2001 (2001-08), XP002254297 INTERNET

## Beschreibung

Die Erfindung betrifft ein Verfahren gemäss dem Oberbegriff von Patentanspruch 1.Neuere Kommunikationsarchitekturen sehen die Trennung vermittlungstechnischer Netzwerke in verbindungsdienstbezogene Einheiten und den Transport der Nutzinformationen (Bearer Control) vor. Hieraus resultiert eine Dekomposition/ Trennung von Verbindungsaufbau und Medium-bzw. Beareraufbau. Die Übertragung der Nutzinformationen (Durchschaltung des Nutzkanals) kann dabei über unterschiedliche hochbitratige Transporttechnologien wie z.B. ATM, IP, Frame Relay vorgenommen werden. Mit einer derartigen Trennung sind die gegenwärtig in Schmalbandnetzen geführten Telekommunikationsdienste auch in Breitbandnetzen zu realisieren. Dabei werden die Teilnehmer entweder direkt (z.B. über ein DSS1-Protokoll) oder über als Media Gateway Controller (MGC) ausgebildete Vermittlungsstellen (z. B. über das ISUP-Protokoll) angeschlossen. Die Nutzinformationen selbst werden über von Media Gateways (MG) in die jeweils benutzte Transporttechnologie umgewandelt. Die Steuerung der Media Gateways werden von jeweils zugeordneten Media Gateway Controllern (MGC) durchgeführt. Zur Steuerung der Media Gateways verwenden die Media Gateway Controller normierte Protokolle, wie z. B. das MGCP Protokoll oder das H.248 Protokoll.. Zur Kommunikation untereinander verwenden die Media Gateway Controller ein durch die ITU standardisiertes BICC (Bearer Independent Call Control) Protokoll, das eine Weiterentwicklung eines ISUP Protokolls darstellt. Das BICC Protokoll wird aus einer Mehrzahl von standardisierten Protokollen gebildet und umfasst somit eine Protokollfamilie.

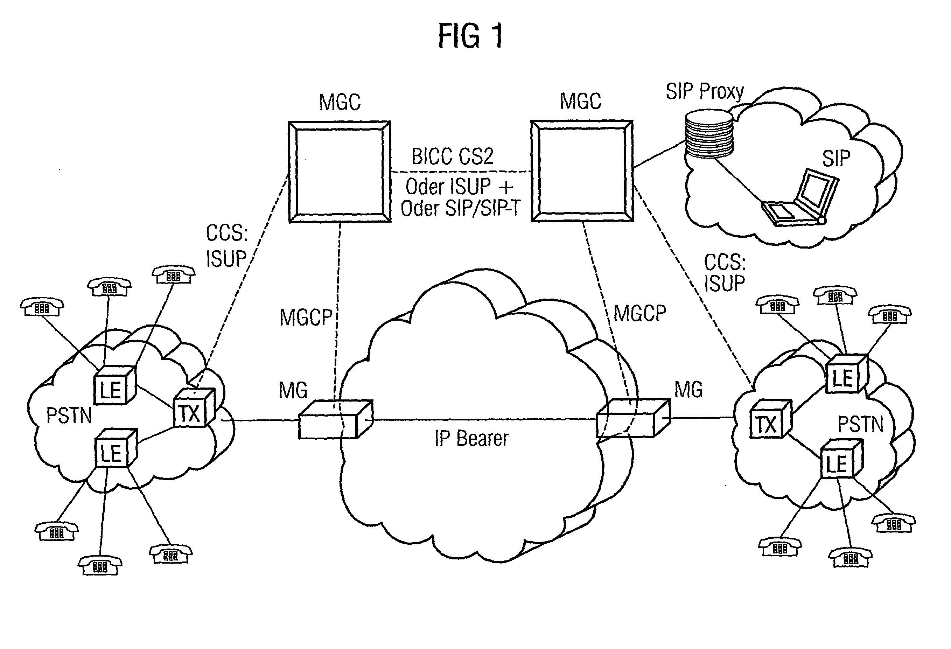

Dem BICC Protokoll adäquate Protokolle sind bei dem IETF Standardisierungsgremium mit den SIP und SIP-T Protokollen entstanden. Das SIP-T Protokoll (RFC 3204) stellt dabei einen Zusatz zum SIP Protokoll (RFC 3261) dar. Mit Hilfe des SIP-T Protokolls können ISUP-Nachrichten - im Gegensatz zum SIP Protokoll - übertragen werden. Die Übertragung der ISUP-Nachrichten erfolgt im Allgemeinen durch Tunneln, d.h. durch transparentes Durchreichen. Vorzugsweise werden die von einem PSTN-Teilnehmer abgegebenen ISUP-Nachrichten zusammen mit einer Trägernachricht geführt (INFO Methode, RFC 2976) und dem empfangenden PSTN-Teilnehmer zugeleitet. In Fig. 1 ist eine derartige, allgemeine Netzkonfiguration mit TDM -/ IP Netzen aufgezeigt. Hierbei sind beispielhaft 2 PSTN-Netze offenbart, in denen jeweils eine Mehrzahl von PSTN-Teilnehmern in bekannter Weise angeordnet sind. Diese sind an Ortsvermittlungsstellen LE herangeführt, die ihrerseits mit Transit-Vermittlungsstellen TX verbunden sind. In den Transit-Vermittlungsstellen TX wird nun die Trennung zwischen Signalisierungsinformationen und Nutzinformationen durchgeführt. Die Signalisierungsinformationen werden von der Transit-Vermittlungsstelle TX unmittelbar über ein ISUP- Protokoll einem jeweils zugeordneten Media Gateway Controller MGC (der A- oder B-Seite) zugeführt. Die Nutzinformationen werden zu einem (eingangsseitig angeordneten) Media Gateway MG (der A- oder B-Seite) übertragen, das als Schnittstelle zwischen TDM-Netz und einem ATM- bzw. IP- Übertragungsnetz fungiert, wo sie über das betreffende Übertragungsnetz (ATM bzw. IP) paketorientiert übertragen werden. Das Media Gateway MG der A-Seite wird von dem jeweils zugeordneten Media Gateway Controller MGC der A-Seite ebenso gesteuert, wie das Media Gateway MG der B-Seite von dem diesem zugeordneten Media Gateway Controller MGC der B-Seite. Im Falle einer Übertragung der Nutzinformationen vom Media Gateway MG der A-Seite zum Media Gateway MG der B-Seite werden diese wieder unter Steuerung des dem Media Gateway MG der B-Seite zugeordneten Media Gateway Controllers MGC der B-Seite in einen TDM Datenstrom umgewandelt und dem in Frage kommenden PSTN-Teilnehmer zugeführt werden. Die zwischen dem Media Gateway Controller MGC und dem jeweils zugeordneten Media Gateway übertragenen Daten werden von einem standardisierten Protokoll unterstützt. Dieses kann beispielsweise das MGCP oder das H.248 Protokoll sein. Zwischen den beiden Media Gateway Controllern MGC können als standardisierte Protokolle ein BICC Protokoll (bzw. ISUP+ Protokoll), ein SIP- oder SIP-T Protokoll vorgesehen sein. Zwischen beiden Media Gateway Controllern können noch weitere Einrichtungen wie Proxy-Einrichtungen (SIP-Welt) und/ oder CMN Vermittlungsstellen (Call Mediation Node, ISUP/ BICC-Welt) geschaltet sein. Grundsätzlich ist es wünschenswert, dass die aus der TDM Welt bekannten Leistungsmerkmale auch in der IP Welt verwendet werden können. Als Beispiel hierfür sei das Leistungsmerkmal Name Delivery angeführt, das bei herkömmlichen (TDM) CENTREX Teilnehmern bekannt ist. Hierbei wird unter einer CENTREX (Central Office Exchange) Konfiguration eine Konfiguration verstanden, die die Realisierung von Leistungsmerkmalen einer Nebenstellenanlage in Teilnehmervermittlungsstellen des öffentlichen Netzes vorsieht. Werden die Anschlüsse einer Benutzergruppe miteinander über CENTREX Vermittlungsstellen und das öffentliche Telefonnetz verbunden, spricht man von Wide Area CENTREX. Potentielle Nutzer von CENTREX-Diensten sind somit:
- Gruppen mit häufigem Ortswechsel.
- Grosse zusammenhängende Komplexe, wie Hochhäuser, Technologie- und Medienzentren, Flughäfen,
- Gruppen mit dezentralen Strukturen, die hohenInternverkehr zwischen den unterschiedlichen Standorten erzeugen.

Ferner ist in Fig. 1 ist die Anbindung einer SIP CENTREX Konfiguration aufgezeigt, wie sie über einen SIP Proxy Server an einen Media Gateway Controller MGC herangeführt ist. Die Informationen zwischen den SIP Teilnehmern einer SIP CENTREX Konfiguration werden mit Hilfe des SIP Protokolls ausgetauscht. Im SIP Proxy Server werden alle teilnehmerbezogenen Daten der CENTREX Konfiguration verwaltet und gepflegt.

Bei einer derartigen Konfiguration gemäss Fig. 1 besteht nun das Problem, dass im Mischbetrieb (Interworking) von TDM Netzen/ IP Netzen/ SIP CENTREX Konfigurationen/ TDM CENTREX Konfigurationen das aus der TDM Welt für CENTREX Konfigurationen bekannte Leistungsmerkmal Name Delivery hier nicht verwendet werden kann, da die zur Realisierung notwendigen Festlegungen noch nicht erfolgt sind.

Der Erfindung liegt die Aufgabe zugrunde, einen Weg aufzuzeigen, wie das Leistungsmerkmal Name Delivery auch für Netze mit gemischten TDM Konfigurationen/ SIP CENTREX Konfigurationen verwendet werden kann.

Die Erfindung wird ausgehend von den im Oberbegriff von Patentanspruch 1 angegebenen Merkmalen durch die im kennzeichnenden Teil beanspruchten Merkmale gelöst.

Der Vorteil der Erfindung ist darin zu sehen, dass bei Verwendung von SIP CENTREX Konfigurationen jedem beliebigen Teilnehmer (SIP oder traditioneller TDM Teilnehmer) der Name des anderen Teilnehmers (Partner) angezeigt wird. Ein weitere Vorteil der Erfindung ist darin zu sehen, dass das Leistungsmerkmal Name Delivery auch in ISUP/ BICC/ H323 Netzen im Interworking zum SIP Netz ohne Einschränkung verwendet werden kann. Das Leistungsmerkmal Name Delivery umfasst dabei die Teilfeature "Calling Name" (Anzeige des Namens des rufenden Teilnehmers) sowie "Connected Name" (Anzeige des Namens des gerufenen Teilnehmers bei Annahme des Rufes).

Vorteilhafte Weiterbildungen der Erfindung sind in den Unteransprüchen angegeben.

Die Erfindung wird im folgenden anhand eines figürlich dargestellten Ausführungsbeispiels näher erläutert.

Es zeigen:
- Figur 1: die Verhältnisse zwischen 2 PSTN-Netzen, zwischen denen ein Internetnetz angeordnet ist, sowie mit einer SIP CENTREX Konfiguration,
- Figur 2: die Anbindung einer SIP CENTREX Konfiguration an ein Internetnetz mit den für die Realisierung des Leistungsmerkmales Name Delivery notwendigen Informationselementen

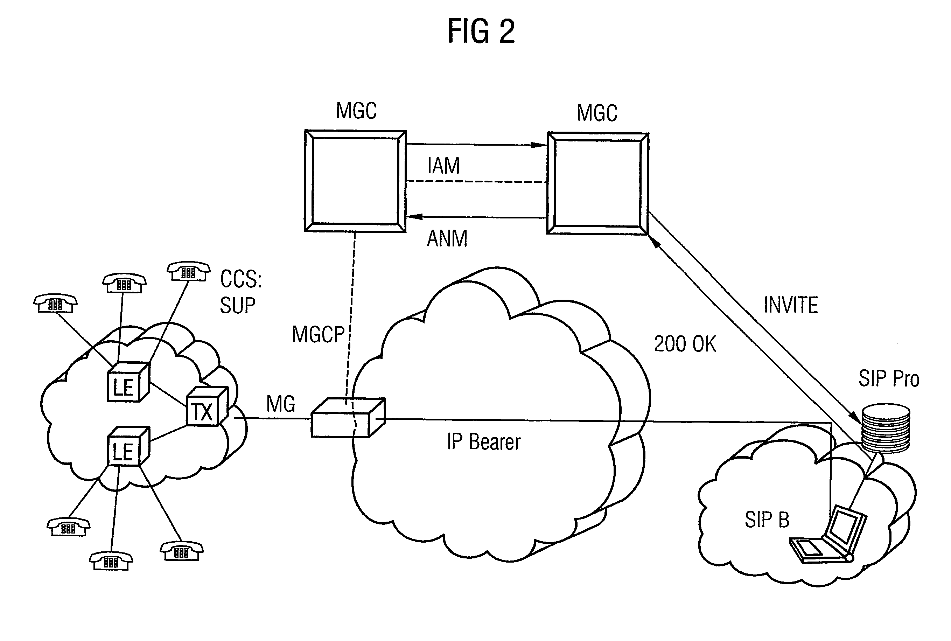

Gemäss Fig. 2 ist die Erfindung anhand eines Ausführungsbeispiels näher erläutert. Hierbei wird davon ausgegangen, dass der Teilnehmer eines TDM Netzes (A-Seite) den SIP Teilnehmer (B-Seite) einer SIP CENTREX Konfiguration - im vorliegenden Fall den Teilnehmer SIP B - anruft. Die Signalisierungsverbindung soll dabei über einen SIP Proxy (Application Server) Server geführt werden, der das Leistungsmerkmal Name Delivery unterstützt.

Zur Realisierung sind zunächst die Festlegungen gemäss TAB 1 für das Mapping beim Übergang ISUP/ BICC auf SIP und umgekehrt zu treffen. Das Mapping wird im Media Gateway Controller MGC der B-Seite gesteuert (Obwohl die Controllerfunktionalität hier ausgeblendet ist, da kein Media Gateway vorhanden ist, wird die Einrichtung MGC der B-Seite als Media Gateway Controller bezeichnet). Da das Leistungsmerkmal Name Delivery für TDM CENTREX Konfiguration gemäss dem Stand der Technik (ISUP/ BICC) über proprietäre Lösungen gesteuert wird, werden die Namensinformationen in unterschiedlichen Protokollelementen des ISUP/ BICC Protokolls geführt. Beispielhaft seien hier zwei Anbieter A1, A2 aufgezeigt. Im Falle von A1 wird beispielsweise die Namensinformation im ISUP/BICC Protokollelement "CallingName" geführt, im Falle eines Anbieters A2 im ISUP/BICC Protokollelement "CTX coding/ decoding" (APP Parameter (application transport parameter) basierend auf ITU-T Recommendation Q.765). In letzterem Fall wird hier auch die Namensinformation für das Teilfeature "Connected Name" geführt.

**TAB 1**

| Anbieter | ISUP/BICC | SIP |
|---|---|---|
| A 1 | CallingName | Display field in FROM header/ privacy header |
| A 2 : CTX ASE calling name | CTX coding/decoding | Display field in FROM header/ privacy header |
| A 2 : CTX ASE connected name | CTX coding/decoding | Display name of the CONTACT Header/ privacy header |

Erfindungsgemäß wird nun (TAB 1, rechte Spalte) in einem ersten Schritt vorgesehen, die Namensinformationen für das Teilfeature "Calling Name", grundsätzlich in das Protokollelement des SIP Protokolls "Display field in FROM header/ privacy header" zu übertragen (Mapping). Im Falle des Teilfeatures "Connected Name" soll die Namensinformation im SIP Protokollelement "Display name of the CONTACT Header/ privacy header" geführt werden.

In einem zweiten Schritt sind nun die weiteren Aktionen in TAB 2 aufgezeigt. Die Namensinformationen werden in den SIP Protokollelementen "Display field in FROM header/ privacy header" dem Proxy Server SIP Proxy über die SIP Nachricht "INVITE" zugeführt. Dieser überprüft zunächst, ob der gerufene Teilnehmer SIP B die Namensanzeige des rufenden Teilnehmers gestattet oder beantragt hat (gebührenpflichtiger Dienst). Dies ist möglich, da der Proxy Server die hierzu relevanten Daten in einer Datenbank abgelegt hat. Diese kann eine interne Datenbank im Proxy Server selbst sein, sie kann aber auch extern mit diesem verbunden sein. In der Datenbank kann auch eine Information darüber abgelegt sein, ob der rufende Teilnehmer die Anzeige seines Namens wünscht oder nicht. Gestattet der gerufene Teilnehmer SIP B keine Namensanzeige des rufenden Teilnehmers, wird vom Proxy Server die Namensinformation dem SIP Protokollelement "Display field in FROM header/ privacy header" entfernt.

Andernfalls wird die Namensanzeige der Datenbank entnommen und in das Protokollelement "Display field in FROM header/privacy header" eingefügt. Falls die Namensanzeige bereits vorhanden ist, wird keinerlei Eingriff vorgenommen. Die Namensinformation wird im Protokollelement "Display field in FROM header/ privacy header" dem gerufenen Teilnehmer SIP B zugeführt und am Endgerät angezeigt.

**TAB 2**

| SIP | Proxy Server(SIP Proxy) | SIP |
|---|---|---|
| | Abfrage der Datenbank | |
| FROM header/ privacy header | Wird das Leistungsmerkmal Name Delivery (Calling Name) vom gerufenen Teilnehmer gewünscht ? | Add or remove Display field in FROM header/privacy header |
| CONTACT Header/ privacy header | Wird das Leistungsmerkmal Name Delivery (Connected Name) vom gerufenen Teilnehmer gewünscht ? | Display name of the CONTACT Header/ privacy header |

Im folgenden wird nun davon ausgegangen, dass der gerufene Teilnehmer SIP B den Ruf annimmt. Über die SIP Quittungsnachricht 200 OK wird die Namensinformation des gerufenen SIP Teilnehmers SIP B geführt und im Proxy Server ausgewertet. Ist die Namensanzeige beim rufenden Teilnehmer zugelassen, wird diese im SIP Protokollelement "Display name of the CONTACT Header/ privacy header" eingefügt, oder entnommen, falls die Anzeige unterdrückt werden soll.

Es ist zu beachten, dass die Erfindung auch angewendet werden kann, wenn es keinen ISUP/ BICC Protokolle zwischen dem PSTN Teilnehmer (ISDN, Analoger Teilnehmer oder auch Mobilfunk Teilnehmer) und dem SIP Teilnehmer gibt. Dies bedeutet, dass das Verfahren dann innerhalb der Vermittlungsstelle stattfindet. Das Interworking von NextGenerationNetwork Teilnehmern wie VoDSL, H323 etc. zu SIP bzw. SIP-T wird damit ebenfalls möglich.

Bei dem soeben beschriebenen Verfahren ist eine Trennung der Verfahrensabläufe im Media Gateway Controller und dem Proxy Server vorgenommen worden. Diese Trennung ist aber nicht zwingend, der Ablauf des Verfahrens kann auch innerhalb eine einzigen Einrichtung stattfinden.

## Patentansprüche

1. Verfahren zur Unterstützung des Leistungsmerkmales Name Delivery, mit TDM Netzen, die an SIP CENTREX Konfigurationen herangeführt sind, wobei die für das Leistungsmerkmal Name Delivery relevanten Informationen Namensinformationen sind, die in mehreren, sich unterscheidenden Informationselementen eines Übertragungsprotokolls übertragen werden können,
**dadurch gekennzeichnet,**
**dass** zwischen den in mehreren, sich unterscheidenden Informationselementen des Übertragungsprotokolls geführten Namensinformationen und den Informationselementen eines SIP Protokolls ein Mapping vorgenommen wird, und
**dass** nach Maßgabe von teilnehmerbezogenen Informationen die Namensinformationen in den Informationselementen des SIP Protokolls unterdrückt oder zugelassen werden.

2. Verfahren nach Anspruch 1,
**dadurch gekennzeichnet,**
**dass** das Leistungsmerkmal Name Delivery aus jeweils zwei Teilfeatures ausgebildet ist.

3. Verfahren nach Anspruch 1, 2,
**dadurch gekennzeichnet,**
**dass** das Mapping zwischen den in mehreren, sich unterscheidenden Informationselementen des Übertragungsprotokolls geführten Namensinformationen eines ersten Teilfeatures in ein erstens Informationselement des SIP Protokolls, und das Mapping zwischen den in mehreren, sich unterscheidenden Informationselementen des Übertragungsprotokolls geführten Namensinformationen eines zweiten Teilfeatures in ein zweites Informationselement des SIP Protokolls vorgenommen wird.

4. Verfahren nach Anspruch 1 bis 3,
**dadurch gekennzeichnet,**
**dass** die Namensinformation eines ersten Teilfeatures in dem Informationselement der SIP Nachricht "INVITE" und die Namensinformation eines zweiten Teilfeatures in dem Informationselement der SIP Nachricht "200 OK" geführt werden.

5. Verfahren nach Anspruch 1 bis 4,
**dadurch gekennzeichnet,**
**dass** ein SIP Proxy Server vorgesehen wird, der in Wirkverbindung mit einer Datenbank steht.

6. Verfahren nach Anspruch 5,
**dadurch gekennzeichnet,**
**dass** in der Datenbank teilnehmerbezogene Daten der Teilnehmer der SIP CENTREX Konfiguration und des TDM Netzes geführt werden.

7. Verfahren nach einem der vorstehenden Ansprüche,
**dadurch gekennzeichnet,**
**dass** das Mapping in einem Media Gateway Controller (MGC) vorgenommen wird.

8. Verfahren nach einem der vorstehenden Ansprüche,
**dadurch gekennzeichnet,**
**dass** von einem Proxy Server nach Maßgabe der in einer Datenbank geführten teilnehmerbezogenen Informationen entschieden wird, ob die Namensinformationen unterdrückt oder zugelassen werden.

9. Verfahren nach einem der vorstehenden Ansprüche,
**dadurch gekennzeichnet,**
**dass** das Übertragungsprotokoll als BICC/ ISUP Protokoll, als H.323 Protokoll, als DSS1 Protokoll oder als ein Mobilfunkanwendungen unterstützendes Protokoll ausgebildet ist.

## Claims

1. Method for supporting the Name Delivery feature, with TDM networks which are brought to SIP CENTREX configurations, wherein the information relevant to the Name Delivery feature is name information which can be transmitted in a number of differing information elements of a transmission protocol, **characterized in that** mapping is carried out between the name information carried in a number of differing information elements of the transmission protocol and the information elements of an SIP protocol and **in that** the name information is suppressed or allowed in the information elements of the SIP protocol as determined by user-related information.

2. Method according to Claim 1, **characterized in that** the Name Delivery feature is arranged from in each case two partial features.

3. Method according to Claim 1, 2, **characterized in that** the mapping between the name information of a first partial feature, carried in a number of differing information elements of the transmission protocol, is carried out in a first information element of the SIP protocol and the mapping between the name information of a second partial feature carried in a number of differing information elements of the transmission protocol, is carried out in a second information element of the SIP protocol.

4. Method according to Claim 1 to 3, **characterized in that** the name information of a first partial feature is carried in the information element of the SIP message "INVITE" and the name information of a second partial feature is carried in the information element of the SIP message "200 OK".

5. Method according to Claim 1 to 4, **characterized in that** an SIP proxy server is provided which is effectively connected to a database.

6. Method according to Claim 5, **characterized in that** user-related data of the users of the SIP CENTREX configuration and of the TDM network are carried in the database.

7. Method according to one of the preceding claims, **characterized in that** the mapping is carried out in a media gateway controller (MGC).

8. Method according to one of the preceding claims, **characterized in that** a proxy server decides whether the name information is suppressed or allowed as determined by the user-related information carried in a database.

9. Method according to one of the preceding claims, **characterized in that** the transmission protocol is arranged as BICC/ISUP protocol, as H. 323 protocol, as DSS1 protocol or as a protocol supporting mobile radio applications.

## Revendications

1. Procédé pour supporter la caractéristique Name Delivery, avec des réseaux TDM, qui sont rapprochés de configurations SIP CENTREX, les informations importantes pour la caractéristique Name Delivery étant des informations de nom qui peuvent être transmises dans plusieurs éléments d'information, qui se différencient, d'un protocole de transmission,
**caractérisé en ce que**
une cartographie est effectuée entre les informations de nom gérées dans plusieurs éléments d'information, qui se différencient, du protocole de transmission et les éléments d'information d'un protocole SIP, et
**en ce que**, en fonction d'informations spécifiques à l'abonné, les informations de nom sont supprimées ou autorisées dans les éléments d'information du protocole SIP.

2. Procédé selon la revendication 1,
**caractérisé en ce que**
la caractéristique Name Delivery est formée de respectivement deux fonctions partielles.

3. Procédé selon les revendications 1, 2
**caractérisé en ce que**
la cartographie entre les informations de nom, gérées dans plusieurs éléments d'information se différenciant du protocole de transmission, d'une première fonction partielle est effectuée dans un premier élément d'information du protocole SIP et la cartographie entre les informations de nom, gérées dans plusieurs éléments d'information se différenciant du protocole de transmission, d'une seconde fonction partielle est effectuée dans un second élément d'information du protocole SIP.

4. Procédé selon les revendications 1 à 3,
**caractérisé en ce que**
l'information de nom d'une première fonction partielle est située dans l'élément d'information du message SIP "INVITE" et l'information de nom d'une seconde fonction partielle dans l'élément d'information du message SIP "200 OK".

5. Procédé selon les revendications 1 à 4,
**caractérisé en ce qu'**il est prévu un SIP Proxy Server qui est en liaison active avec une banque de données.

6. Procédé selon la revendication 5,
**caractérisé en ce que**
des données spécifiques à l'abonné des abonnés de la configuration SIP CENTREX et du réseau TDM sont gérées dans la banque de données.

7. Procédé selon l'une quelconque des revendications précédentes,
**caractérisé en ce que**
la cartographie est effectuée dans un Media Gateway Controller (MGC).

8. Procédé selon l'une quelconque des revendications précédentes,
**caractérisé en ce que**
un Proxy Server décide en fonction des informations spécifiques à l'abonné et gérées dans une banque de données si les informations de nom sont supprimées ou autorisées.

9. Procédé selon l'une quelconque des revendications précédentes,
**caractérisé en ce que**
le protocole de transmission est réalisé sous forme de protocole BICC/ISUP, de protocole H.323, de protocole DSS1 ou d'un protocole supportant des applications de téléphonie mobile.
